# EUROPÄISCHE PATENTANMELDUNG

(11) **EP 2 168 441 A1**
(43) Veröffentlichungstag der Anmeldung: **31.03.2010**
(21) Anmeldenummer: 08165264.6
(22) Anmeldetag: 26.09.2008
(51) Int. Cl.: A23L 1/212, A23L 1/30, A23L 2/02

(54) **Probiotische Smoothies**

(71) Anmelder: Döhler GmbH, 64295 Darmstadt (DE)
(72) Erfinder: Schildknecht, Eckhard, 64397 Modautal (DE); Hechler, Thomas, 64295 Darmstadt (DE); Tretzel, Joachim Dr., 64342 Seeheim-Jugenheim (DE)
(74) Vertreter: Schreiber, Christoph

(57) **Zusammenfassung**

Lebensmittel enthaltend
- mindestens 95 Gew% Obst- und/oder Gemüsezubereitungen
- 0,005 bis 5 Gew% einer Mischung von mindestens zwei Inhaltsstoffen ausgewählt aus der Gruppe enthaltend Antioxidantien, Lebensmittelfermentate und Lebensmittelextrakte,
- mindestens 10⁶ cfu/ml probiotische Keime,

wobei das Produkt einen pH-Wert von größer 4,0 bis 4,6 aufweist.

## Beschreibung

Die vorliegende Erfindung betrifft Lebensmittel mit probiotischen Keimen und Verfahren zu ihrer Herstellung.

Probiotika sind Zubereitungen, die lebensfähige Mikroorganismen enthalten und einen gesundheitsfördernden Einfluss beim Verzehr aufweisen. Typische probiotische Mikroorganismen sind Milchsäurebakterien.

Solche Produkte haben sich insbesondere im Molkereibereich durchgesetzt und einen großen Absatzmarkt gefunden.

Ein wesentliches Merkmal der probiotischen Lebensmittel ist der Gehalt an lebensfähigen Keimen. Nur durch eine entsprechend große Keimzahl pro Verzehreinheit wird sich ein Einfluss, beispielsweise auf die Darmflora, erreichen lassen.

Der Gehalt an lebendenden Keimen stellt hohe Anforderungen an das Lebensmittel. Ein zu rasches Absterben der enthaltenen Kulturen würde die Wirkung als Probiotikum in Frage stellen. Ein unkontrolliertes Wachstum würde zu Geschmacks- oder Geruchsfehlnoten führen und wäre ebenfalls inakzeptabel. Der üblicherweise auftretende Verlust von probiotischen Keimen wird durch eine entsprechend berechnete Überdosage kompensiert.

Die Anpassung ist bei Molkereiprodukten dadurch erleichtert, dass die Milchsäurebakterien durch Fermentation in der Milch herangezogen werden können und relativ gut an entsprechende Medien adaptiert sind.

Die probiotischen Produkte weisen typischerweise relativ kurze Haltbarkeiten auf und müssen über eine Kühlkette gelagert und distribuiert werden.

Es besteht weiterhin Bedarf nach anderen Lebensmitteln, die sich durch gute Lagerungseigenschaften und hohe Gehalte an probiotischen Keimen auszeichnen.

Aufgabe der vorliegenden Erfindung war es, solche Produkte bereitzustellen.

Gelöst wird die Aufgabe durch ein Lebensmittel enthaltend
- mindestens 95 Gew% Obst- und/oder Gemüsezubereitungen
- 0,005 bis 5 Gew% einer Mischung von mindestens zwei Inhaltsstoffen ausgewählt aus der Gruppe enthaltend Antioxidantien, Lebensmittelfermentate und Lebensmittelextrakte,
- mindestens 10⁶ cfu/ml probiotische Keime,
wobei das Produkt einen pH-Wert von größer 4,0 bis 4,6 aufweist.

Erfindungsgemäß setzt sich das Produkt also aus den üblichen Obst- und/oder Gemüsezubereitungen oder Mischungen zusammen. Zusätzlich wird eine Mischung von mindestens zwei Inhaltsstoffen zugesetzt, die stabilisierend auf die zugesetzte probiotischen Keimen wirken, hierbei handelt es sich um Antioxidantien, Lebensmittelfermentate und/oder Lebensmittelextrakte.

Das Produkt wird dann mit mindestens 10⁶ cfu/ml probiotische Keime versetzt und der pH-Wert auf einen Bereich größer 4,0 bis 4,6 eingestellt.

Bevorzugt liegt der pH-Wert im Bereich von 4,1 bis 4,6, oder im pH-Bereich bis 4,3.

Als Obst- und Gemüsezubereitungen können die typischen Obst und Gemüse gewählt werden, die für Smoothies bekannt sind, beispielsweise Apfel, Erdbeere, Karotte, Bananen, Mango, Blaubeere, Himbeere, Orange, schwarze Karotte oder Mischungen davon.

Als Antioxidantien eignen sich insbesondere Ascorbinsäure, Lycopin, Betacarotin, Lutein, Astaxanthin, Vitamin E, gemischte Tocopherole, isolierte Polyphenole wie beispielsweise EGCG (Epigallo-catechingallat). Bei Antioxidantien liegen bevorzugte Gehalte im Bereich von 0,005 bis 0,05 Gew%.

In einer Ausführungsform können die Antioxidantien von Fruchtzubereitungen enthalten sein. In einer anderen Ausführungsform werden sie als aufgereinigte Substanzen zugeführt.

Als Lebensmittelfermentate eignen sich insbesondere nicht-alkoholische fermentierte Produkte wie Malzextrakte und Saftfermentate. Bei Fermentaten liegen bevorzugte Gehalte im Bereich von 0,05 bis 0,5 Gew%.

Als Lebensmittelextrakte eignen sich beispielsweise Grünteeextrakte, Traubenextrakte aus roter oder weißer Traube, aus den Kernen, Schalen oder Kombinationen davon, Granatapfelextrakte, chlorogensäurereiche Röstkaffee- bzw. Grüner Kaffeeextrakt. Bei Lebensmittelextrakten liegen bevorzugte Gehalte im Bereich von 0,005 bis 0,05 Gew%.

Überraschenderweise zeigen die Produkte bei einer Lagerung im Bereich +4 bis +8°C innerhalb von acht Wochen maximal eine Abnahme der probiotischen Keime von 2 logarithmischen Einheiten.

Wird das Produkt beispielweise mit 10⁹ cfu/ml versetzt, beträgt der Gehalt nach acht Wochen im Lagerungsbereich von +4 bis +8°C mindestens noch 10⁷ cfu/ml. Wird das Produkt mit beispielsweise 10⁷ cfu/ml versetzt, zeigt sich nach dem Lagerungszeitraum noch einen Mindestgehalt von 10⁵ cfu/ml.

In einer bevorzugten Ausführungsform wird das Lebensmittel in einem Sauerstoff impermeablen Behälter verpackt. Dabei kann es sich grundsätzlich um einen Glasbehälter handeln, aber auch um Kunststoffbehälter, die eine Sauerstoffsperre umfassen, sind geeignet.

In einer weiteren Ausführungsform ist es bevorzugt, dass das Lebensmittel unter Schutzgas verpackt wird. Dies kann beispielsweise erfolgen durch Einbringen eines Inertgases, beispielsweise in Form von flüssigem Stickstoff, um Luftsauerstoff aus dem Produkt fernzuhalten.

Gegenstand der Erfindung ist auch ein Verfahren zur Herstellung eines Lebensmittels, wobei Obst- und/oder Gemüsezubereitungen mit einer Mischung von mindestens zwei Inhaltsstoffen, ausgewählt aus Antioxidantien, Lebensmittelfermentaten und Lebensmittelextrakten und mindestens 10⁶ cfu/ml probiotische Keimen versetzt werden und der pH-Wert auf größer 4,0 bis 4,6 eingestellt wird.

Gegenstand ist weiterhin die Verwendung des erfindungsgemäßen Lebensmittels zur Versorgung von Menschen mit probiotischen Mikroorganismen.

Die Erfindung wird durch die folgenden Beispiele näher erläutert.

### Beispiel 1 (Vergleichsbeispiel)

| *Überlebensrate eines probiotischen Keims in unterschiedlichen Produkten ohne Zusätze* | | | | |
|---|---|---|---|---|
| Produkt | pH-Wert | KBE/g | KBE/ | KBE/g |
| | | Nach Beimpfen (T0) | Nach 2 Wochen | Nach 4 Wochen |
| Banane-Guave | 3,79 | 8,4 * 10⁷ | 5,5 * 10⁶ | < 10² |
| Traube-Apfel | 3,75 | 9,6 * 10⁷ | 8,4 * 10⁷ | 8,6 * 10⁴ |
| Mango-Birne-Guave | 4,07 | 8,1 * 10⁷ | 7,7 * 10⁶ | 7,3 * 10⁴ |

### Beispiel 2

| *Überlebensrate eines probiotischen Keims in unterschiedlichen Produkten mit 180 mg*/*L Ascorbinsäure und 5g*/*L eines nicht-alkoholischen Malzfermentats.* | | | | |
|---|---|---|---|---|
| Produkt | pH-Wert | KBE/g | KBE/ | KBE/g |
| | | Nach Beimpfen (T0) | Nach 3 Wochen | Nach 8 Wochen |
| Mango- Passionsfrucht-Orange | 4,06 | 6 * 10⁸ | 4 * 10⁸ | 2 * 10⁷ |

### Beispiel 3

| *Überlebensrate eines probiotischen Keims in unterschiedlichen Produkten mit* 180 mg/L Ascorbinsäure und 100 mg/L Grünteeextrakt (40% Polyphenolgehalt) | | | | |
|---|---|---|---|---|
| Produkt | pH-Wert | KBE/g | KBE/ | KBE/g |
| | | Nach Beimpfen \(T0) | Nach 4 Wochen | Nach 8 Wochen |
| Mango-Banane | 4,13 | 6 * 10⁸ | 4,8 * 10⁸ | 3,2 * 10⁷ |
| Ananas-Banane-Kokos | 4,27 | 7,3 * 10⁸ | 2,2 * 10⁸ | 1,9 * 10⁷ |
| Mango- Passionsfrucht-Orange | 4,05 | 8,2 * 10⁸ | 2,3 * 10⁸ | 4,4 * 10⁷ |

Lagerung jeweils bei +4°C

## Patentansprüche

1. Lebensmittel enthaltend
- mindestens 95 Gew% Obst- und/oder Gemüsezubereitungen
- 0,005 bis 5 Gew% einer Mischung von mindestens zwei Inhaltsstoffen ausgewählt aus der Gruppe enthaltend Antioxidantien, Lebensmittelfermentate und Lebensmittelextrakte,
- mindestens 10⁶ cfu/ml probiotische Keime,
wobei das Produkt einen pH-Wert von größer 4,0 bis 4,6 aufweist.

2. Lebensmittel nach Anspruch 1, **dadurch gekennzeichnet, dass** die Obst- und Gemüsezubereitung auswählt werden aus Apfel, Erdbeere, Karotte, Banane, Mango, Blaubeere, Himbeere, Orange, schwarze Karotte oder Mischungen davon.

3. Lebensmittel nach Anspruch 1 oder 2, **dadurch gekennzeichnet, dass** die Antioxidantien ausgewählt sind aus Ascorbinsäure, Lycopin, Betacarotin, Lutein, Astaxanthin, Vitamin E, gemischte Tocopherole, isolierte Polyphenole wie beispielsweise EGCG (Epigallo-catechingallat).

4. Lebensmittel nach mindestens einem der Ansprüche 1 bis 3, **dadurch gekennzeichnet, dass** die Antioxidantien in Form von Fruchtzubereitungen enthalten sind.

5. Lebensmittel nach mindestens einem der Ansprüche 1 bis 4, **dadurch gekennzeichnet, dass** die Lebensmittelfermentate nicht-alkoholisch fermentiert wurden.

6. Lebensmittel nach mindestens einem der Ansprüche 1 bis 5, **dadurch gekennzeichnet, dass** die Lebensmittelextrakte ausgewählt werden aus polyphenolreichen Extrakten wie Grünteeextrakt, Traubenextrakt, Granatapfelextrakt, chlorogensäurereiche Röstkaffee- bzw. Grüner Kaffeeextrakt.

7. Lebensmittel nach mindestens einem der Ansprüche 1 bis 6, **dadurch gekennzeichnet, dass** die Produkte bei einer Lagerung im Bereich von +4 bis +8°C innerhalb von 8 Wochen eine Abnahme der probiotischen Keime von maximale 2 logarithmischen Einheiten zeigen.

8. Lebensmittel nach mindestens einem der Ansprüche 1 bis 7, **dadurch gekennzeichnet, dass** das Lebensmittel in einem Sauerstoff impermeablen Behälter verpackt ist.

9. Lebensmittel nach mindestens einem der Ansprüche 1 bis 8, **dadurch gekennzeichnet, dass** das Lebensmittel unter Schutzgas verpackt ist.

10. Verfahren zur Herstellung eines Lebensmittels nach einem der Ansprüche 1 bis 9, wobei Obst- und/oder Gemüsezubereitungen mit einer Mischung von mindestens zwei Inhaltsstoffen ausgewählt aus Antioxidantien, Lebensmittelfermentaten und Lebensmittelextrakten und mindestens 10⁶ cfu/ml probiotische Keimen versetzt werden und der pH-Wert auf größer 4,0 bis 4,6 eingestellt wird.
